# EUROPÄISCHE PATENTSCHRIFT

(11) **EP 2 210 465 B1**
(45) Veröffentlichungstag und Bekanntmachung des Hinweises auf die Patenterteilung: **06.03.2013**
(21) Anmeldenummer: 10401011.1
(22) Anmeldetag: 19.01.2010
(51) Int. Cl.: A01C 7/08, A01C 7/10

(54) **Landwirtschaftliche pneumatische Verteilmaschine**
Agricultural pneumatic distributor
Distributeur pneumatique agricole

(30) Priorität: 22.01.2009 DE 102009005661
(43) Veröffentlichungstag der Anmeldung: 28.07.2010
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Wilken, Martin, 26409 Wittmund (DE); Schröder, Olaf, 27798 Hude (DE)

(56) Entgegenhaltungen:
- DE-A1-102004 038 258
- DE-A1-102007 016 760
- US-A- 4 779 765

## Beschreibung

Eine derartige Verteilmaschine ist beispielsweise in der DE 10 2004 038 258 A1 beschrieben. Diese Verteilmaschine weist einen Vorratsbehälter auf, dessen trichterförmigen unteren Bereich eine zentrale Dosiereinrichtung zugeordnet ist. Unterhalb der zentralen Dosiereinrichtung ist ein Verbindungsschacht angeordnet, über welche das von dem Zentraldosierer aus dem Behälter entnommene Material in dosierter Weise in zwei unterhalb des Verbindungsschachtes angeordneten Schleusen, die zwei im Bereich des Dosierers parallel zueinander verlaufenden Förderleitungen zugeordnet sind, eingespeist wird. Diese Förderleitungen sind mit einem pneumatischen Förderluftstrom beaufschlagt. Die Förderleitungen münden über Steigrohre in Verteilerköpfen, von denen aus das Material in gleichmäßiger Weise auf von den Verteilerköpfen abgehenden Ausbringleitung aufgeteilt zugeleitet wird. Die Dosiereinrichtung ist zu den Förderleitungen hier derart eingebaut, dass die Antriebsachse der Antriebswelle der Säeinrichtung quer zur Längsrichtung bzw. Förderrichtung der beiden Förderleitungen im Bereich der Dosiervorrichtung verläuft. Die Leitwand ist in Längsrichtung der Förderleitungen angeordnet.

Aufgrund dieser bekannten Ausrichtung der Dosiervorrichtung zu den Förderleitungen ragt zumindest der Antriebsstummel der Dosierwelle und der hierauf angeordnete Antrieb über den Außenbereich der Förderleitungen hinaus. Darüber hinaus ist ein aufwendiger komplizierter Antriebsmechanismus erforderlich, wenn mehrere Dosiervorrichtungen unterschiedliche Materialien in die einzelnen Förderleitungen einspeisen und die Dosiervorrichtungen hintereinander gekoppelt angetrieben werden.

Der Erfindung liegt die Aufgabe zugrunde, auf einfache Weise eine kompaktere Anordnung und Zuordnung der Dosiervorrichtung zu den Förderleitungen und die Voraussetzungen für einen vereinfachten Antrieb mehrerer hintereinander angeordneter Dosiervorrichtungen zu schaffen.

Dieser Aufgabe wird erfindungsgemäß durch die kennzeichnenden Merkmale des Patentanspruches 1 gelöst. Infolge dieser Maßnahmen ergibt sich eine bessere Zuordnung von Dosierorgan, Verbindungsschacht und Leitwand zu zwei einer Dosiervorrichtung zugeordneten Förderleitungen. Auch ist es möglich mehrere Dosiervorrichtungen in Förderrichtungen gesehen hintereinander anzuordnen und die Antriebswellen der einzelnen zentralen Dosiervorrichtung in einfacher Weise durch einfache Kupplungen und Zwischenwellen miteinander zu verbinden, da die Antriebswellen miteinander in fluchtender Ordnung in einfacher Weise angeordnet werden können. Bei einem Antrieb des Dosierers mit einem Elektromotor, kann dieser im Raum oberhalb der Förderleitungen angeordnet werden.

Eine einfache Anordnung der Leitwand und der verschenkbaren Einstellung lässt sich dadurch verwirklichen, dass die Leitwand an ihrem unteren Ende mittels einer Schwenkanordnung an den Wandungen des Verbindungsschachtes verschwenkbar gelagert ist.

Eine einfache Anordnung des Verstellelementes an der Schwenkwelle der Leitwand lässt sich dadurch realisieren, dass die Schwenkanordnung eine Schwenkwelle aufweist, dass an der Schwenkwelle die Leitwand befestigt ist, dass an dem aus dem Verbindungsschacht herausgeführten Ende der Schwenkwelle ein Einstellelement angeordnet ist.

Weitere Einzelheiten der Erfindung sind der Beispielsbeschreibung und den Zeichnungen zu entnehmen. Hierbei zeigen
- Fig. 1: das Verteilsystem und Dosiersystem der Sämaschine mit einem Vorratsbehälter in perspektivischer Darstellung,
- Fig.2: die Zuordnung der Dosiervorrichtung zu den Verbindungsschacht und den Förderleitungen in anderer perspektivischer und vergrößerter Darstellung, wobei die Seitenwandungen des Dosierers nicht dargestellt sind,
- Fig. 3: den Verbindungsschacht in Zuordnung zu den Übergabeschleusen der Förderleitungen in perspektivischer Darstellung, wie Fig. 2, jedoch in vergrößertem Maßstab,
- Fig. 4: den Verbindungsschacht mit dem Förderleitung und dem Verbindungsschacht in der Darstellungsweise nach Fig. 3, jedoch mit Abnahme der in Förderrichtung gesehenen Vorderwand und der rechten Seitenwand des Verbindungsschachtes und
- Fig. 5: das Verteilsystem und Dosiersystem der Sämaschine mit Vorratsbehälter in perspektivischer Darstellung, wobei zwei Dosiervorrichtung in Förderrichtung hintereinander den gleichen Förderleitungen in gleicher Weise zugeordnet sind.

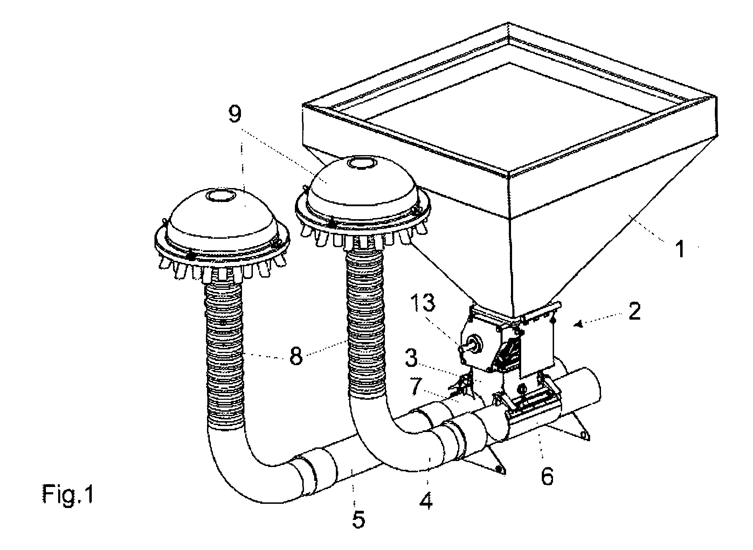

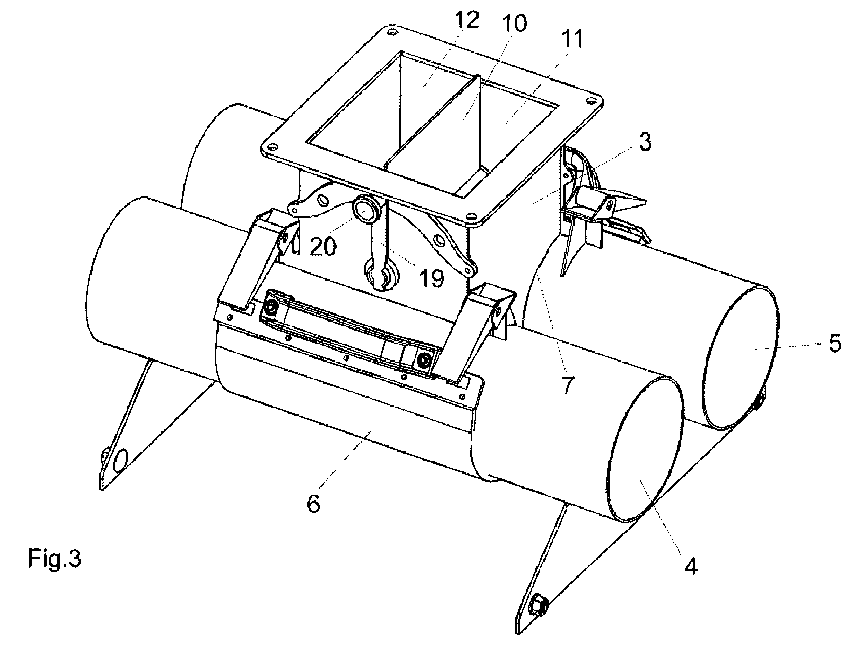

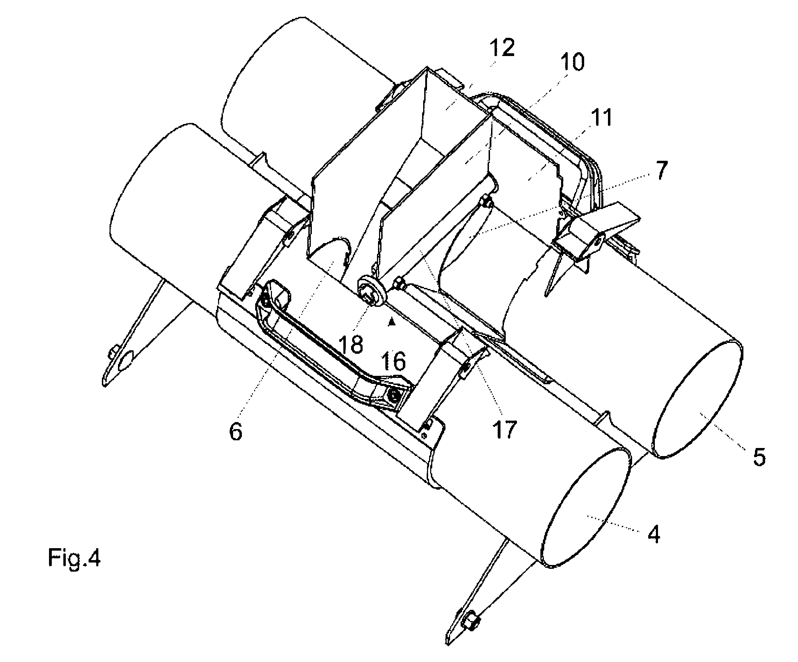

Die pneumatische Verteilmaschine gemäß den Fig. 1 bis 4 weist den trichterförmigen Vorratsbehälter 1 auf. Unter dem Auslauf des Vorratsbehälters 1 ist die von einem eine Regeleinrichtung aufweisende und nicht dargstellten Antrieb angetriebene zentrale Dosiereinrichtung 2 angeordnet. Unterhalb der Dosiereinrichtung 2 ist ein Verbindungsschacht 3 angeordnet, der zu Förderleitungen 4 und 5 zugeordneten Schleusen führt. Die Schleusen 6, 7 sind an dem Verbindungsschacht 3 anschließend angeordnet. Dem Verbindungsschacht 3 sind die beiden mit einem pneumatischen Förderluftstrom beaufschlagten Förderleitungen 4 und 5 zugeordnet, die jeweils über ein Steigrohr 8 zu einem Verteilerkopf 9 führen, von dem aus das in den Förderluftstrom über die Dosiereinrichtungen 2 eindosierte Material in gleichmäßiger Weise auf von ihn abgehenden und zu Ausbringelementen führenden Ausbringleitungen aufgeteilt wird. Der Verbindungsschacht 3 ist durch eine Leitwand 10 in zwei Teilschächte 11 und 12 aufgeteilt. Der eine Teilschacht 11 führt zu der Schleuse 7 der einen Förderleitung 5 und der andere Teilschacht 12 führt zu der Schleuse 6 der anderen Förderleitung 4, wie insbesondere Fig. 4 zeigt.

Die Dosiereinrichtung 2 weist die auf einer Antriebswelle 13 angeordnete Zellenräder 14 auf, welche durch einen nicht dargestellten regelbaren Antrieb, beispielsweise einem regelbaren Elektromotor, ein über ein Bodenrad antreibbares Regelgetriebe etc., in einstellbarer Weise angetrieben werden. Mittels der der Dosiereinrichtung 2 zugeordneten Trennwand 15 wird das Fördervolumen der Zellenräder 14 der Dosiereinrichtung 2 jeweils einem Teilschacht 11, 12 des Verbindungsschachtes 3 entsprechend zugeleitet.

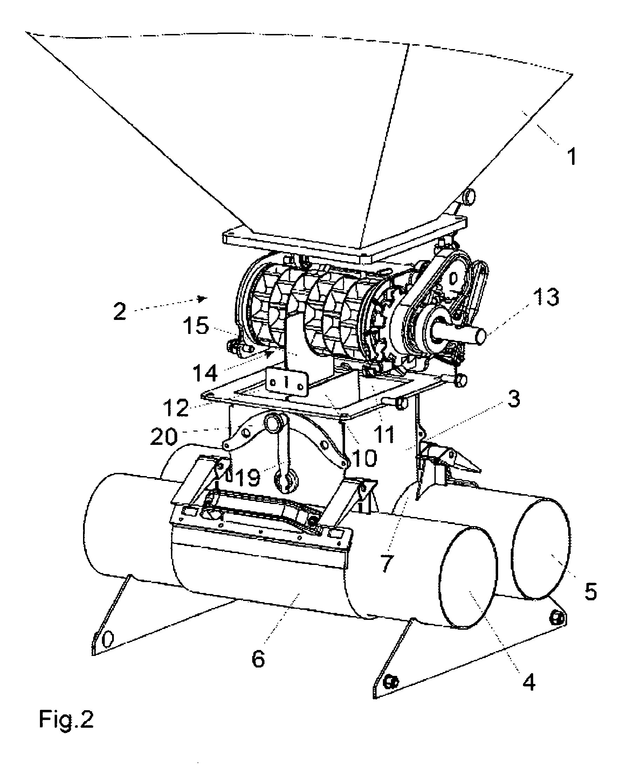

In dem unterhalb der Dosiereinrichtung 2 angeordneten Verbindungsschacht 3 ist unterhalb der Zellenräder 14 und der Trennwand 15, den die Dosierrädern 14 zugeordnet ist, eine aufrechte Leitwand 10 angeordnet. Die Leitwand 10 ist an ihrem unteren Ende mittels einer Schwenkanordnung 16 an den Wandungen des Verbindungsschachtes 3 verschwenkbar gelagert, wie die Fig. 2 bis 4 zeigen. Die Schwenkanordnung 16 weist die Schwenkwelle 17 auf. An der Schwenkwelle 17 ist die Leitwand 10 befestigt. Des Weiteren ist an dem aus dem Verbindungsschacht 3 herausgeführten Ende 18 der Schwenkwelle 17 das Einstellelement 19 angeordnet, welches mit einem Feststellelement 20 zusammenwirkt, um so die Leitwand 10 in der jeweils vorgesehenen Position entsprechend einstellen zu können.

Über die Leitwand 10 ist der dem jeweiligen als Teilschacht 11, 12ausgebildeten Förderschacht des Verbindungsschachtes 3 entsprechend nach der Einstellung der Leitwand 10 die Materialmenge aufzuteilen. Die Antriebsachse der Antriebswelle 13 der Dosiereinrichtung 2 verläuft parallel zu der Längsrichtung der beiden Förderleitungen 4, , wie die Fig. 1 bis 4 zeigen. Weiterhin ist die Leitwand 10 quer zur Längsrichtung der Förderleitungen 4, 5 verlaufen angeordnet.

Durch die Ausrichtung der Antriebsachse der Antriebswelle 13 der Dosiereinrichtung 2 parallel zu der Längsrichtung der beiden Förderleitungen 4, 5 lässt sich beispielsweise die als elektromotorischer Antrieb ausgebildete Antriebsvorrichtung in einem Raum oberhalb der Förderleitungen 4, 5 in geschützter und kompakter Weise anordnen.

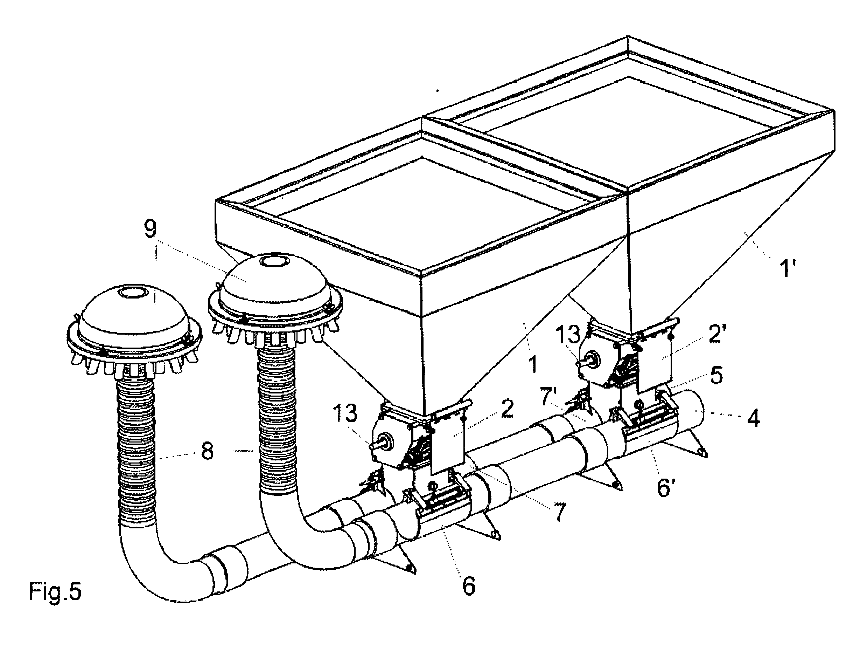

Die Ausführung gemäß Fig. 5 unterscheidet sich von dem Ausführungsbeispiel gemäß den Fig. 1 bis 4 dadurch, dass der Förderleitungen 4, 5 jeweils ein weiterer Vorratsbehälter 1' mit Dosiereinrichtung 2', Verbindungsschach t 3' und Schleusen 6', 7' zugeordnet sind. Somit können jeder Förderleitung 4, 5 verschiedene auszubringende Materialien, wie beispielsweise Saatgut und Dünger zugeleitet werden. Durch die entsprechende Einstellung der Leitwände der Verbindungsschächte 3, 3' kann das jeder Förderleitung 4, 5 zudosierte Materialverhältnis entsprechend eingestellt werden.

## Patentansprüche

1. Landwirtschaftliche pneumatische Verteilmaschine für körniges Material, wie Saatgut und/oder Dünger oder dergleichen mit zumindest einem trichterförmigen Vorratsbehälter und zumindest einer zentralen Dosiereinrichtung, welcher zwei an ein Gebläse angeschlossene und zu Verteilerköpfen führende pneumatisch beaufschlagte und parallel zueinander im Bereich der Dosiereinrichtungen verlaufende Förderleitungen zugeordnet sind, wobei das von der Dosiereinrichtung dosierte Material über einen Verbindungsschacht und Schleusen in die Förderluftströme der Förderleitungen einleitbar ist, wobei dem Förderschacht ein auf die jeweilige Förderleitungen aufteilende Leitwand in einstellbarer Weise zugeordnet ist, wobei die Dosiereinrichtung auf einer drehbar angetriebenen Antriebswelle angeordnete Dosierelemente aufweist, **dadurch gekennzeichnet, dass** die Antriebsachse der Antriebswelle (13,13') der Dosiereinrichtung (2,2') zumindest annähernd parallel zu der Längsrichtung der beiden Förderleitungen (4,5) verläuft, und dass die Leitwand (10) quer zur Längsrichtung der Förderleitungen (4,5) verläuft.

2. Verteilmaschine nach Anspruch 1, **dadurch gekennzeichnet, dass** die Leitwand (10) an ihrem unteren Ende mittels einer Schwenkanordnung (16) an den Wandungen des Verbindungsschachtes (3) verschwenkbar gelagert ist.

3. Verteilmaschine nach Anspruch 1, **dadurch gekennzeichnet, dass** die Schwenkanordnung (16) eine Schwenkwelle (17) aufweist, dass an der Schwenkwelle (17) die Leitwand (10) befestigt ist, dass an dem aus dem Verbindungsschacht (3) herausgeführten Ende (18) der Schwenkwelle (17) ein Einstellelement (19) angeordnet ist.

## Claims

1. Agricultural pneumatic distribution machine for granular material such as seed and/or fertilizer or the like, having at least one hopper-like storage container and at least one central metering device to which there are assigned two feed lines that are connected to a blower, lead to distribution heads, are acted upon pneumatically and extend parallel to one another in the region of the metering devices, wherein the material metered by the metering device is introducible via a connecting shaft and sluices into the feed air flows of the feed lines, wherein a guide wall that apportions to the respective feed lines is assigned to the feed shaft in a settable manner, wherein the metering device has metering elements arranged on a rotatably driven drive shaft, **characterized in that** the drive axis of the drive shaft (13, 13') of the metering device (2, 2') extends at least approximately parallel to the longitudinal direction of the two feed lines (4, 5), and **in that** the guide wall (10) extends transversely to the longitudinal direction of the feed lines (4, 5).

2. Distribution machine according to Claim 1, **characterized in that** the lower end of the guide wall (10) is pivotably mounted on the walls of the connecting shaft (3) by means of a pivot arrangement (16).

3. Distribution machine according to Claim 1, **characterized in that** the pivot arrangement (16) has a pivot shaft (17), **in that** the guide wall (10) is fastened to the pivot wall (17), and **in that** a setting element (19) is arranged at that end (18) of the pivot shaft (17) that leads out of the connecting shaft (3).

## Revendications

1. Distributeur pneumatique agricole pour matière en grains, comme des semences et/ou des engrais ou similaires, comprenant au moins un réservoir en forme d'entonnoir et au moins un dispositif de dosage central, auquel sont affectées deux conduites de transport sollicitées pneumatiquement, raccordées à une soufflante, conduisant à des têtes de distribution et s'étendant parallèlement l'une à l'autre dans la région des dispositifs de dosage, la matière dosée par le dispositif de dosage pouvant être introduite par le biais d'un puits de connexion et de sas dans les flux d'air de transport des conduites de transport, une paroi de guidage étant affectée au puits de transport de manière ajustable, laquelle paroi de guidage effectue une division vers les conduites de transport respectives, le dispositif de dosage présentant des éléments de dosage disposés sur un arbre d'entraînement entraîné en rotation, **caractérisé en ce que** l'axe d'entraînement de l'arbre d'entraînement (13, 13') du dispositif de dosage (2, 2') s'étend au moins approximativement parallèlement à la direction longitudinale des deux conduites de transport (4, 5), et **en ce que** la paroi de guidage (10) s'étend transversalement à la direction longitudinale des conduites de transport (4, 5).

2. Distributeur selon la revendication 1, **caractérisé en ce que** la paroi de guidage (10) est montée au niveau de son extrémité inférieure de manière pivotante au moyen d'un agencement de pivotement (16) au niveau des parois du puits de connexion (3).

3. Distributeur selon la revendication 1, **caractérisé en ce que** l'agencement de pivotement (16) présente un axe de pivotement (17), **en ce que** la paroi de guidage (10) est fixée sur l'axe de pivotement (17), et **en ce qu'**à l'extrémité (18) de l'axe de pivotement (17) guidée hors du puits de connexion (3) est disposé un élément d'ajustement (19).
